# EUROPEAN PATENT APPLICATION

(11) **EP 3 128 722 A1**
(43) Date of publication of application: **08.02.2017**
(21) Application number: 16180892.8
(22) Date of filing: 22.07.2016
(51) Int. Cl.: H04L 29/08, H04W 4/00, H04W 4/04, H04W 4/08

(54) **FILE TRANSMISSION METHOD AND APPARATUS, COMPUTER PROGRAM AND RECORDING MEDIUM**

(30) Priority: 07.08.2015 CN 201510484988
(71) Applicant: Xiaomi Inc., Beijing 100085 (CN)
(72) Inventor: LI, Weixing, Beijing, Beijing 100085 (CN); WAN, Yuzhen, Beijing, Beijing 100085 (CN); OUYANG, Chengfeng, Beijing, Beijing 100085 (CN); WANG, Ying, Beijing, Beijing 100085 (CN); LIN, Zhaoqin, Beijing, Beijing 100085 (CN)
(74) Representative: Jeffrey, Philip Michael

(57) **Abstract**

A file transmission method and apparatus, a computer program and a recording medium are disclosed which belong to the field of communications among devices. By scanning at least one terminal that is in a connectable state in a current environment; displaying a device name of the terminal that is in a connectable state; receiving a first selecting signal selecting the device name; establishing a communication connection with a terminal corresponding to a selected device name; transmitting a control command to the selected terminal through the communication connection; receiving a transmission signal for transmitting a file to the selected terminal; and transmitting the file to the selected terminal, this invention solves the following problem: when the device names of multiple terminals are the same, the terminals cannot be selected accurately so that files are leaked. The following effects are achieved: when the device names of multiple terminals are the same, a receiving terminal can be determined quickly, and files can be prevented from being transmitted to other terminals.

## Description

### TECHNICAL FIELD

The present invention generally relates to the field of communications among devices, and more particularly, relates to a file transmission method and apparatus, a computer program and a recording medium.

### BACKGROUND

Users usually need to transmit files from a terminal A to a terminal B.

In the related arts, the terminal A scans at least one terminal in a current environment, and displays a device name of the scanned terminal on a display screen. Users select the terminal B based on the device name. Then, the terminal A transmits files to the terminal B.

When multiple mobile devices log onto the same user account, or none of the multiple mobile devices logs onto a user account, the device names of the multiple mobile devices are the same, and users cannot select the terminal B accurately. If false selections are made by the users, the terminal A will transmit files to other terminals, so that the files are leaked to users of other terminals.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

To overcome the problem that when the device names of multiple terminals are the same, the terminals cannot be selected accurately so that files are leaked, the present invention provides a file transmission method and apparatus, a computer program and a recording medium. The technical solutions are as below:

Advantageously, there is provided a file transmission method, comprising:
scanning at least one terminal that is in a connectable state in a current environment;
establishing a communication connection with a selected terminal;
transmitting a control command to the selected terminal through the communication connection, the control command instructing the selected terminal to perform preset feedback;
receiving a transmission signal for transmitting a file to the selected terminal; and
transmitting the file to the selected terminal.

In an optional embodiment, said transmitting a control command to the selected terminal through the communication connection comprises:
detecting, in the terminal that is in the connectable state, if there is another terminal having the same device name as that of the selected terminal;
transmitting the control command to the selected terminal through the communication connection if there is another terminal having the same device name as that of the selected terminal.

In an optional embodiment, the control command comprises at least one of: a command to vibrate, a command to ring, a command to twinkle a signal lamp, a command to twinkle a flash lamp and displaying predetermined content.

In an optional embodiment, said establishing a communication connection with a selected terminal comprises:
displaying a device name of the terminal that is in the connectable state;
receiving a first selecting signal selecting the device name, the first selecting signal being any one of a click signal, a double click signal, a long press signal and a drag signal; and
establishing the communication connection with a terminal corresponding to a selected device name.

In an optional embodiment, said receiving a transmission signal for transmitting a file to the selected terminal comprises: receiving a second selecting signal selecting the device name, the second selecting signal being any one of a click signal, a double click signal, a long press signal and a drag signal.

Advantageously, there is provided a file transmission apparatus, comprising:
a scanning module configured to scan at least one terminal that is in a connectable state in a current environment;
a connecting module configured to establish a communication connection with a selected terminal;
a first transmitting module configured to transmit a control command to the selected terminal through the communication connection, the control command instructing the selected terminal to perform preset feedback;
a receiving module configured to receive a transmission signal for transmitting a file to the selected terminal; and
a second transmitting module configured to transmit the file to the selected terminal.

In an optional embodiment, the first transmitting module comprises:
a detecting sub-module configured to detect, in the terminal that is in the connectable state, if there is another terminal having the same device name as that of the selected terminal;
a transmitting sub-module configured to transmit the control command to the selected terminal through the communication connection if there is another terminal having the same device name as that of the selected terminal.

In an optional embodiment, the control command comprises at least one of: a command to vibrate, a command to ring, a command to twinkle a signal lamp, a command to twinkle a flash lamp and displaying predetermined content.

In an optional embodiment, the connecting module comprises:
a displaying sub-module configured to display a device name of the terminal that is in the connectable state;
a first receiving sub-module configured to receive a first selecting signal selecting the device name, the first selecting signal being any one of a click signal, a double click signal, a long press signal and a drag signal; and
a first connecting sub-module configured to establish the communication connection with a terminal corresponding to a selected device name.

In an optional embodiment, the connecting module is configured to receive a second selecting signal selecting the device name, the second selecting signal being any one of a click signal, a double click signal, a long press signal and a drag signal.

Advantageously, there is provided a file transmission apparatus, comprising:
a processor; and
a memory configured to store an instruction executable by the processor,
wherein the processor is configured to:
   scan at least one terminal that is in a connectable state in a current environment;
   establish a communication connection with a selected terminal;
   transmit a control command to the selected terminal through the communication connection, the control command instructing the selected terminal to perform preset feedback;
   receive a transmission signal for transmitting a file to the selected terminal; and
   transmit the file to the selected terminal.

In one particular embodiment, the steps of the file transmission method are determined by computer program instructions.

Advantageously, there is also provided a computer program for executing the steps of a file transmission method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Advantageously, the information medium can be an integrated circuit in which the program is incorporated, the circuit being adapted to execute the method in question or to be used in its execution.

The technical solutions of the embodiments of this invention have the following advantageous effects:
By scanning at least one terminal that is in a connectable state in a current environment; displaying a device name of the terminal that is in a connectable state; receiving a first selecting signal selecting the device name; establishing a communication connection with a terminal corresponding to a selected device name; transmitting a control command to the selected terminal through the communication connection; receiving a transmission signal for transmitting a file to the selected terminal; and transmitting the file to the selected terminal, the following problem is solved: when the device names of multiple terminals are the same, the terminals cannot be selected accurately so that files are leaked. The following effects are achieved: when the device names of multiple terminals are the same, a receiving terminal can be determined quickly, and files can be prevented from being transmitted to other terminals.

It should be understood that both the foregoing general description and the following detailed description are only exemplary and explanatory and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
FIG. 1 is a flow chart showing a file transmission method according to an exemplary embodiment.
FIG. 2A is a flow chart showing a file transmission method according to another exemplary embodiment.
FIG. 2B is a flow chart showing the sub-steps of a file transmission method according to another exemplary embodiment.
FIG. 3 is a schematic drawing showing the display of device names according to an exemplary embodiment.
FIG. 4 is a schematic drawing showing feedback of a control command according to an exemplary embodiment.
FIG. 5 is a flow chart showing a file transmission method according to yet another exemplary embodiment.
FIG. 6 is a block view showing a file transmission apparatus according to an exemplary embodiment.
FIG. 7 is a block view showing a file transmission apparatus according to another exemplary embodiment.
FIG. 8 is a block view showing a file transmission apparatus according to yet another exemplary embodiment.
FIG. 9 is a block view showing a file transmission apparatus according to yet another exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

The terminal in the embodiments of this invention may be a smart cell phone, a tablet computer, a smart TV, an electronic book reader, a multimedia player or the like, but only the terminal is exemplified in the embodiments of this invention.

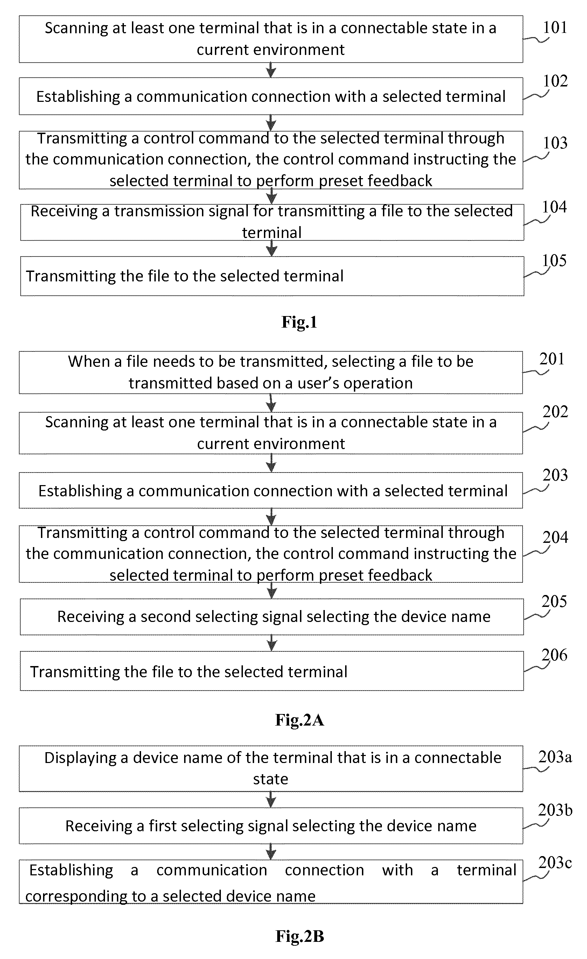

FIG. 1 is a flow chart showing a file transmission method according to an exemplary embodiment. As shown in FIG. 1, the file transmission method comprises the steps of:
Step 101: scanning at least one terminal that is in a connectable state in a current environment;
Step 102: establishing a communication connection with a selected terminal;
Step 103: transmitting a control command to the selected terminal through the communication connection, the control command instructing the selected terminal to perform preset feedback;
Step 104: receiving a transmission signal for transmitting a file to the selected terminal; and
Step 105: transmitting the file to the selected terminal.

To sum up, by applying the file transmission method of the above embodiment of this invention, the method comprising: scanning at least one terminal that is in a connectable state in a current environment; establishing a communication connection with a selected terminal; transmitting a control command to the selected terminal through the communication connection, the control command instructing the selected terminal to perform preset feedback; receiving a transmission signal for transmitting a file to the selected terminal; and transmitting the file to the selected terminal, the following problem is solved: when the device names of multiple terminals are the same, the terminals cannot be selected accurately so that files are leaked. The following effects are achieved: when the device names of multiple terminals are the same, a receiving terminal can be determined quickly, and files can be prevented from being transmitted to other terminals.

FIG. 2A is a flow chart showing a file transmission method according to another exemplary embodiment. As shown in FIG. 2A, the file transmission method comprises the following steps.

Step 201: when a file needs to be transmitted, selecting a file to be transmitted based on a user's operation.

When a user needs to transmit a file, the user will activate a fast transmission function in the transmitting terminal.

The transmitting terminal refers to a terminal that has a file to be transmitted. The fast transmission function is a function provided by software in a terminal for transmitting files.

After the user activates the fast transmission function, the transmitting terminal selects a file to be transmitted based on the user's operation.

Step 202: scanning at least one terminal that is in a connectable state in a current environment.

After the transmitting terminal selects a file to be transmitted based on the user's operation, the transmitting terminal scans a terminal that is in a connectable state in a current environment.

The transmitting terminal may scan the terminal that is in a connectable state in a current environment using any one method of Bluetooth, Wi-Fi (Wireless-Fidelity) and a local area network (LAN).

An example is given in which the transmitting terminal scans the terminal that is in a connectable state in a current environment using Bluetooth. When the transmitting terminal scans the terminal, the terminal that is in a connectable state will send a Bluetooth broadcast signal containing a device name corresponding to the terminal that is in a connectable state to the transmitting terminal using Bluetooth. The transmitting terminal receives the Bluetooth broadcast signal in the current environment to determine the terminal that is in a connectable state.

This embodiment does not limit the number of terminals that are in a connectable state.

Step 203: establishing a communication connection with a selected terminal.

This step may include the following steps, as shown in FIG. 2B.

Step 203a: displaying a device name of the terminal that is in a connectable state.

Each terminal corresponds to a device name, which may be a name of a user account or a name of the terminal itself. When the user account is not logged on, the device names of multiple terminals may be the same.

For example, three cell phones of the same brand appear in the current environment. Take brand A as an example. Assume none of the three cell phones logs on a user account, the transmitting terminal scans two terminals that are in a connectable state. The device names of the two terminals are both "Cell Phone of Brand A".

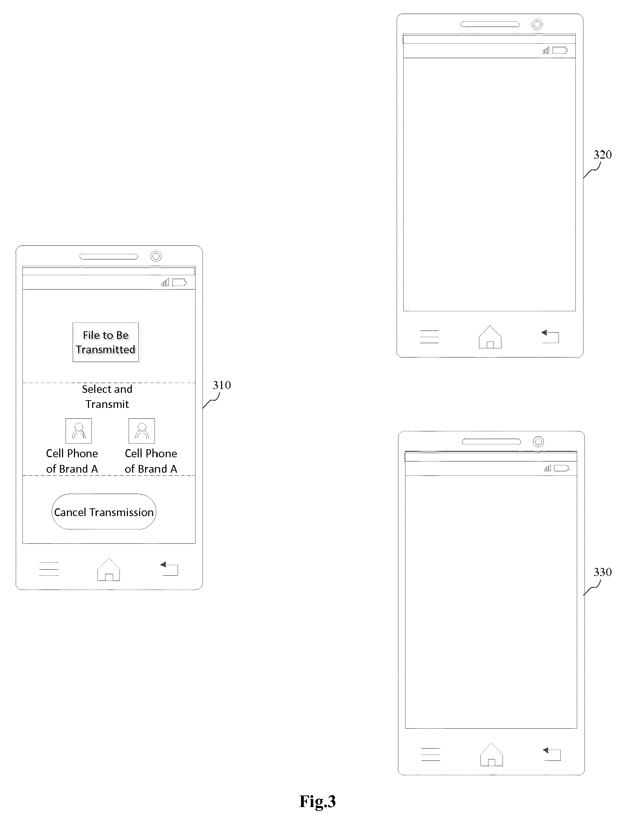

The transmitting terminal displays the device names of the terminals received after scanning on a scanning page, as shown in FIG. 3.

As shown in FIG. 3, the terminal 310 is the transmitting terminal. The terminals 320 and 330 are terminals that are in a connectable state in the current environment. The device names of the terminals 320 and 330 are both "Cell Phone of Brand A", and are displayed on the scanning page of the terminal 310.

Step 203b: receiving a first selecting signal selecting the device name.

Optionally, the first selecting signal may be any one of a click signal, a double click signal, a long press signal and a drag signal.

The transmitting terminal receives the user's first selecting signal selecting the device names displayed on the scanning page of the terminal 310.

Step 203c: establishing a communication connection with a terminal corresponding to a selected device name.

The user selects one device name from the device names displayed on the scanning page of the terminal 310. The transmitting terminal performs the first selecting signal to the terminal corresponding to the selected device name. That is, the transmitting terminal establishes a communication connection with the terminal corresponding to the selected device name through the first selecting signal triggered by the user.

Optionally, the communication connection may be any one of Bluetooth, Wi-Fi and a LAN.

Step 204: transmitting a control command to the selected terminal through the communication connection, the control command instructing the selected terminal to perform preset feedback.

The transmitting terminal transmits the control command to the selected terminal through the communication connection.

Optionally, the control command comprises at least one of: a command to vibrate, a command to ring, a command to twinkle a signal lamp, a command to twinkle a flash lamp and displaying predetermined content.

After the transmitting terminal transmits the control command, the user judges if the selected terminal performs preset feedback instructed by the control command.

If the selected terminal performs preset feedback instructed by the control command, the user judges that the selected terminal is the receiving terminal.

The receiving terminal refers to a terminal to which the transmitting terminal will transmit the file. For example, if a terminal A needs to transmit a file in terminal A to a terminal B, the terminal A is the transmitting terminal, and the terminal B is the receiving terminal.

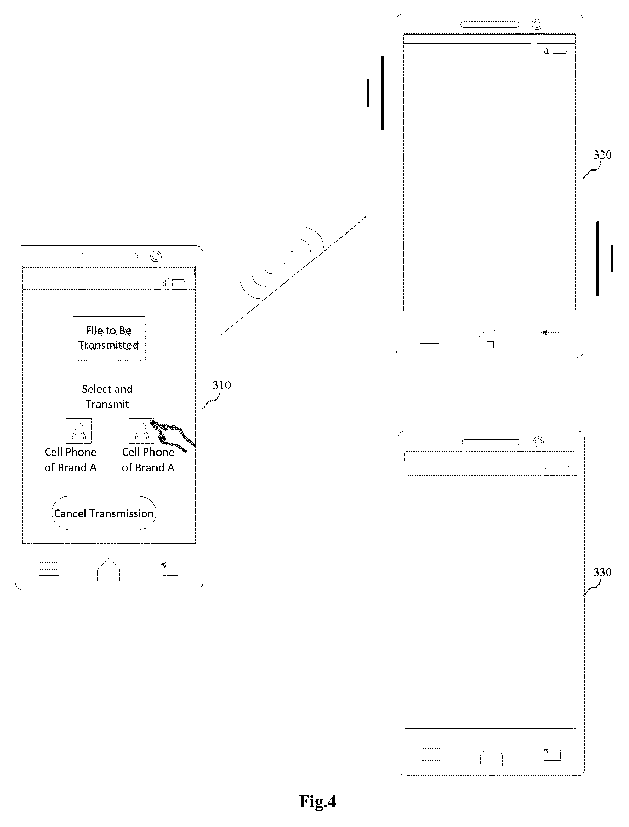

If the selected terminal does not perform preset feedback instructed by the control command, the user judges that the selected terminal is not the receiving terminal, and continues to select a device name corresponding to another terminal. The transmitting terminal sends a control command to another terminal selected by the user, and returns to the step in which the user judges if the selected terminal performs preset feedback instructed by the control command, until a terminal to which the file needs to be transmitted is found. Reference is made to FIG. 4.

As shown in FIG. 4, the terminal 310 in this figure is the transmitting terminal, terminals 320 and 330 are terminals that are in a connectable state in the current environment. When the terminal 310 determines the receiving terminal, the terminal 310 sends a control command to the selected terminal 330 through a communication connection. At this time, the selected terminal 330 does not make any feedback, then the user judges that the selected terminal 330 is not the receiving terminal, and continues to select the terminal 320. The terminal 310 sends a control command to the selected terminal 320 through a communication connection. Take vibration as an example. At this time, the selected terminal 320 will make the preset feedback of vibration according to the control command. The user judges that the selected terminal 320 is the receiving terminal based on the feedback made by the selected terminal 320.

Step 205: receiving a second selecting signal selecting the device name.

Optionally, the second selecting signal is any one of a click signal, a double click signal, a long press signal and a drag signal.

After the user determines the receiving terminal, the user will trigger a second selecting signal selecting the device name for the transmitting terminal, whereupon the transmitting terminal receives the second selecting signal.

The second selecting signal is a transmission signal for transmitting a file to the selected terminal.

After the user determines that the selected terminal is the receiving terminal, the user will trigger a signal for transmitting a file for the transmitting terminal, whereupon the transmitting terminal receives the file transmitting signal.

Step 206: transmitting the file to the selected terminal.

The transmitting terminal transmits the file to the selected terminal based on the received file transmitting signal.

To sum up, by applying the file transmission method of the above embodiment of this invention, the method comprising: scanning at least one terminal that is in a connectable state in a current environment; displaying a device name of the terminal that is in a connectable state; receiving a first selecting signal selecting the device name; establishing a communication connection with a terminal corresponding to the selected device name; transmitting a control command to the selected terminal through the communication connection; receiving a transmission signal for transmitting a file to the selected terminal; and transmitting the file to the selected terminal, the following problem is solved: when the device names of multiple terminals are the same, the terminals cannot be selected accurately so that files are leaked. The following effects are achieved: when the device names of multiple terminals are the same, a receiving terminal can be determined quickly, and files can be prevented from being transmitted to other terminals.

In an exemplary embodiment, assume there are three terminals A, B and C of the same brand, terminals B and C have the same device name "Cell Phone of Brand A", both terminals B and C are in a connectable state, the first selecting signal is a click signal, the second selecting signal is a double click signal, and the preset feedback instructed by the control command is vibration. The file transmission method is as below:
The user first activates the fast transmission function in the terminal A for transmitting files. The terminal A selects a file to be transmitted based on the user's operation. After the file to be transmitted is selected, the terminal A scans a terminal that is in a connectable state in a current environment, then, two identical device names "Cell Phone of Brand A" will appear in the scanning page of the terminal A.

The user selects any one of the device name "Cell Phone of Brand A". The user clicks the selected device name to establish a communication connection between the terminal A and the terminal corresponding to the device name selected by the user. The terminal A sends a control command to the terminal selected by the user through the communication connection.

After the terminal A sends the control command, if the user finds that the corresponding terminal does not make feedback of vibration, the user will continue to select another device name "Cell Phone of Brand A". Repeat the above operations. After the terminal A sends the control command, if the user finds that the terminal B makes feedback of vibration, the user determines that terminal B is the receiving terminal.

After the user determines that terminal B is the receiving terminal, the user performs a double click operation on the selected device name to send the file to the terminal B.

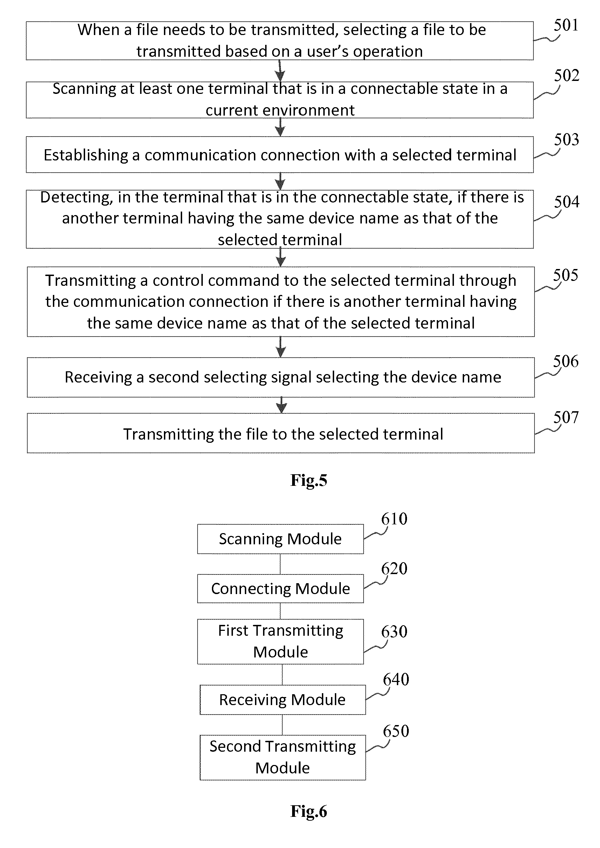

FIG. 5 is a flow chart showing a file transmission method according to yet another exemplary embodiment. The file transmission method may comprise the steps of:
Step 501: when a file needs to be transmitted, selecting a file to be transmitted based on a user's operation.

When a user needs to transmit a file, the user will activate a fast transmission function in the transmitting terminal.

The transmitting terminal refers to a terminal that has a file to be transmitted. The fast transmission function is a function provided by software in a terminal for transmitting files.

After the user activates the fast transmission function, the transmitting terminal selects a file to be transmitted based on the user's operation.

Step 502: scanning at least one terminal that is in a connectable state in a current environment.

After the transmitting terminal selects a file to be transmitted based on the user's operation, the transmitting terminal scans a terminal that is in a connectable state in a current environment.

The terminal that is in a connectable state refers to the terminal that activates the fast transmission function. The transmitting terminal may scan the terminal that is in a connectable state in a current environment using any one method of Bluetooth, Wi-Fi and a LAN.

An example is given in which the transmitting terminal scans the terminal that is in a connectable state in a current environment using Bluetooth. When the transmitting terminal scans the terminal, the terminal that is in a connectable state will send a Bluetooth broadcast signal containing a device name corresponding to the terminal that is in a connectable state to the transmitting terminal using Bluetooth. The transmitting terminal receives the Bluetooth broadcast signal in the current environment to determine the terminal that is in a connectable state.

This embodiment does not limit the number of terminals that are in a connectable state.

Step 503: establishing a communication connection with a selected terminal.

This step is the same as step 203. Reference is made to the embodiment shown in FIG. 2A.

Step 504: detecting, in the terminal that is in the connectable state, if there is another terminal having the same device name as that of the selected terminal.

The transmitting terminal displays the device names of the terminals that are in the connectable state on a scanning page, and detects if there is another terminal having the same device name as that of the selected terminal. That is, the transmitting terminal detects if there is another terminal having the same device name through the displayed device names.

Step 505: transmitting a control command to the selected terminal through the communication connection if there is another terminal having the same device name as that of the selected terminal.

If there is another terminal having the same device name as that of the selected terminal, the transmitting terminal transmits a control command to the selected terminal through the communication connection.

The control command is used to instruct the terminal to perform preset feedback.

Optionally, the control command comprises at least one of: a command to vibrate, a command to ring, a command to twinkle a signal lamp, a command to twinkle a flash lamp and displaying predetermined content.

After the transmitting terminal transmits the control command, the user judges if the selected terminal performs preset feedback instructed by the control command.

If the selected terminal performs preset feedback instructed by the control command, the user judges that the selected terminal is the receiving terminal.

If the selected terminal does not perform preset feedback instructed by the control command, the user judges that the selected terminal is not the receiving terminal, and continues to select a device name corresponding to another terminal. The transmitting terminal sends a control command to another terminal selected by the user, and returns to the step in which the user judges if the selected terminal performs preset feedback instructed by the control command, until a terminal to which the file needs to be transmitted is found.

If there is no terminal having the same device name as that of the selected terminal, the user can directly determine the receiving terminal based on the corresponding device name.

Step 506: receiving a second selecting signal selecting the device name.

Optionally, the second selecting signal is any one of a click signal, a double click signal, a long press signal and a drag signal.

After the user determines the receiving terminal, the user will trigger a second selecting signal selecting the device name for the transmitting terminal, whereupon the transmitting terminal receives the second selecting signal.

The second selecting signal is a transmission signal for transmitting a file to the selected terminal.

After the user determines that the selected terminal is the receiving terminal, the user will trigger a signal for transmitting a file for the transmitting terminal, whereupon the transmitting terminal receives the file transmitting signal.

Step 507: transmitting the file to the selected terminal.

The transmitting terminal transmits the file to the selected terminal based on the received file transmission signal.

To sum up, by applying the file transmission method of the above embodiment of this invention, the method comprising: scanning at least one terminal that is in a connectable state in a current environment; displaying a device name of the terminal that is in a connectable state; receiving a first selecting signal selecting the device name; establishing a communication connection with a terminal corresponding to the selected device name; determining a terminal to which the file needs to be transmitted by detecting if there is another terminal having the same device name as that of the selected terminal; receiving a transmission signal for transmitting a file to the selected terminal; and transmitting the file to the selected terminal, the following problem is solved: when the device names of multiple terminals are the same, the terminals cannot be selected accurately so that files are leaked. The following effects are achieved: when the device names of multiple terminals are the same, a receiving terminal can be determined quickly, and files can be prevented from being transmitted to other terminals.

In an exemplary embodiment, assume there are four terminals A, B, C and D, terminals B and C have the same device name "Cell Phone of Brand A", and the device name of the terminal D is "Lin's Cell Phone", terminals B, C and D are in a connectable state, the first selecting signal is a click signal, the second selecting signal is a double click signal, the preset feedback instructed by the control command is vibration, and the terminal A is the transmitting terminal.

When the terminal B is the receiving terminal, the file transmission method is shown in the exemplary embodiment of FIG. 2A.

When the terminal D is the receiving terminal, the file transmission method is as below:
The user first activates the fast transmission function in the terminal A for transmitting files. The terminal A selects a file to be transmitted based on the user's operation. After the file to be transmitted is selected, the terminal A scans a terminal that is in a connectable state in a current environment, then, two identical device names "Cell Phone of Brand A" and one device name of "Lin's Cell Phone" will appear in the scanning page of the terminal A.

As the device name of the terminal D is different from those of terminals B and C, the user may directly select the device name of "Lin's Cell Phone". After the user selects the device name, the user clicks the selected device name to establish a communication connection between the terminal A and the selected terminal D. After a communication connection is established, the user performs a double click operation on the selected device name to send the file to the terminal D.

The followings are apparatus embodiments of this invention, which may be used to execute the method embodiments of this invention. The method embodiments of this invention may be referred to for the details not disclosed by the apparatus embodiments of this invention.

FIG. 6 is a block view showing a file transmission apparatus according to an exemplary embodiment. As shown in FIG. 6, the file transmission apparatus may comprise:
a scanning module 610 configured to scan at least one terminal that is in a connectable state in a current environment;
a connecting module 620 configured to establish a communication connection with a selected terminal;
a first transmitting module 630 configured to transmit a control command to the selected terminal through the communication connection, the control command instructing the selected terminal to perform preset feedback;
a receiving module 640 configured to receive a transmission signal for transmitting a file to the selected terminal; and
a second transmitting module 650 configured to transmit the file to the selected terminal.

To sum up, using the file transmission apparatus of the above embodiment of this invention, by scanning at least one terminal that is in a connectable state in a current environment; establishing a communication connection with a selected terminal; transmitting a control command to the selected terminal through the communication connection, the control command instructing the selected terminal to perform preset feedback; receiving a transmission signal for transmitting a file to the selected terminal; and transmitting the file to the selected terminal, the following problem is solved: when the device names of multiple terminals are the same, the terminals cannot be selected accurately so that files are leaked. The following effects are achieved: when the device names of multiple terminals are the same, a receiving terminal can be determined quickly, and files can be prevented from being transmitted to other terminals.

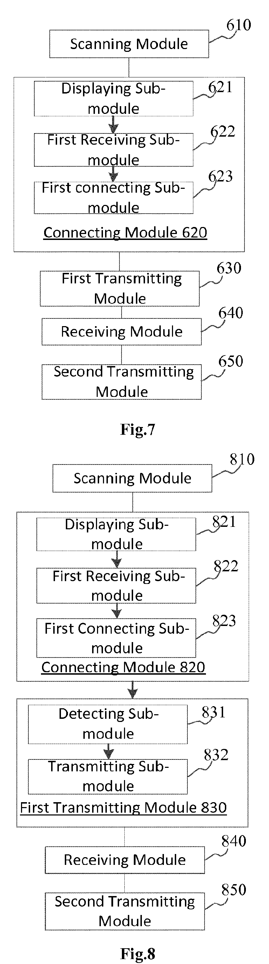

FIG. 7 is a block view showing a file transmission apparatus according to another exemplary embodiment. As shown in FIG. 7, the file transmission apparatus may comprise:
a scanning module 610 configured to scan at least one terminal that is in a connectable state in a current environment;
a connecting module 620 configured to establish a communication connection with a selected terminal;
wherein the connecting module 620 of this embodiment may comprise:
a displaying sub-module 621 configured to display a device name of the terminal that is in the connectable state;
a first receiving sub-module 622 configured to receive a first selecting signal selecting the device name, the first selecting signal being any one of a click signal, a double click signal, a long press signal and a drag signal; and
a first connecting sub-module 623 configured to establish the communication connection with a terminal corresponding to a selected device name;
a first transmitting module 630 configured to transmit a control command to the selected terminal through the communication connection, the control command instructing the selected terminal to perform preset feedback.

Optionally, the control command comprises at least one of: a command to vibrate, a command to ring, a command to twinkle a signal lamp, a command to twinkle a flash lamp and displaying predetermined content.

The file transmission apparatus also comprises: a receiving module 640 configured to receive a transmission signal for transmitting a file to the selected terminal.

Optionally, the receiving module 640 is configured to receive a second selecting signal selecting the device name.

Optionally, the second selecting signal is any one of a click signal, a double click signal, a long press signal and a drag signal.

The file transmission apparatus also comprises: a second transmitting module 650 configured to transmit the file to the selected terminal.

To sum up, using the file transmission apparatus of the above embodiment of this invention, by scanning at least one terminal that is in a connectable state in a current environment; displaying a device name of the terminal that is in a connectable state; receiving a first selecting signal selecting the device name; establishing a communication connection with a terminal corresponding to the selected device name; transmitting a control command to the selected terminal through the communication connection; receiving a transmission signal for transmitting a file to the selected terminal; and transmitting the file to the selected terminal, the following problem is solved: when the device names of multiple terminals are the same, the terminals cannot be selected accurately so that files are leaked. The following effects are achieved: when the device names of multiple terminals are the same, a receiving terminal can be determined quickly, and files can be prevented from being transmitted to other terminals.

FIG. 8 is a block view showing a file transmission apparatus according to yet another exemplary embodiment. As shown in FIG. 8, the file transmission apparatus may comprise:
a scanning module 810 configured to scan at least one terminal that is in a connectable state in a current environment;
a connecting module 820 configured to establish a communication connection with a selected terminal;
wherein the connecting module 820 of this embodiment may comprise:
a displaying sub-module 821 configured to display a device name of the terminal that is in the connectable state;
a first receiving sub-module 822 configured to receive a first selecting signal selecting the device name, the first selecting signal being any one of a click signal, a double click signal, a long press signal and a drag signal; and
a first connecting sub-module 823 configured to establish the communication connection with a terminal corresponding to a selected device name.

The file transmission apparatus also comprises: a first transmitting module 830 configured to transmit a control command to the selected terminal through the communication connection, the control command instructing the selected terminal to perform preset feedback.

Optionally, the control command comprises at least one of: a command to vibrate, a command to ring, a command to twinkle a signal lamp, a command to twinkle a flash lamp and displaying predetermined content.

The first transmitting module 830 of this embodiment may comprise:
a detecting sub-module 831 configured to detect, in the terminal that is in the connectable state, if there is another terminal having the same device name as that of the selected terminal; and
a transmitting sub-module 832 configured to transmit the control command to the selected terminal through the communication connection if there is another terminal having the same device name as that of the selected terminal.

The file transmission apparatus also comprises: a receiving module 840 configured to receive a transmission signal for transmitting a file to the selected terminal.

Optionally, the receiving module 840 is configured to receive a second selecting signal selecting the device name.

Optionally, the second selecting signal is any one of a click signal, a double click signal, a long press signal and a drag signal.

The file transmission apparatus also comprises: a second transmitting module 850 configured to transmit the file to the selected terminal.

To sum up, using the file transmission apparatus of the above embodiment of this invention, by scanning at least one terminal that is in a connectable state in a current environment; displaying a device name of the terminal that is in a connectable state; receiving a first selecting signal selecting the device name; establishing a communication connection with a terminal corresponding to the selected device name; determining a terminal to which the file needs to be transmitted by detecting if there is another terminal having the same device name as that of the selected terminal; receiving a transmission signal for transmitting a file to the selected terminal; and transmitting the file to the selected terminal, the following problem is solved: when the device names of multiple terminals are the same, the terminals cannot be selected accurately so that files are leaked. The following effects are achieved: when the device names of multiple terminals are the same, a receiving terminal can be determined quickly, and files can be prevented from being transmitted to other terminals.

With respect to the apparatus in the above described embodiments, the specific manner of performing operations for individual modules therein have been described in detail in the embodiments regarding the related methods, which will not be elaborated herein.

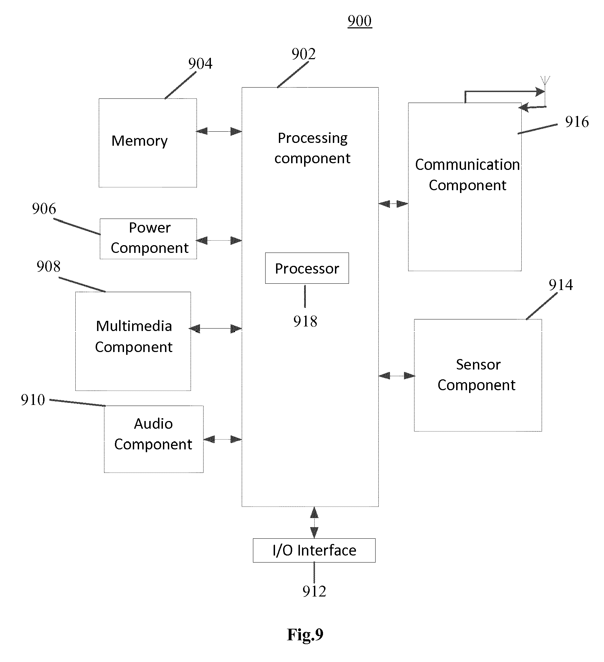

FIG. 9 is a block diagram of a file transmission apparatus according to an exemplary embodiment. For example, the apparatus 900 may be a mobile phone, a computer, a digital broadcasting terminal, a messaging device, a gaming console, a tablet, a medical device, a fitness equipment, a personal digital assistant or the like.

Referring to FIG. 9, the apparatus 900 may include one or more of the following components: a processing component 902, a memory 904, a power supply component 906, a multimedia component 908, an audio component 910, an input/output (I/O) interface 912, a sensor component 914, and a communication component 916.

The processing component 902 typically controls overall operations of the apparatus 900, such as the operations associated with display, telephone calls, data communications, camera operations, and recording operations. The processing component 902 may include one or more processors 918 to execute instructions to perform all or part of the steps in the above described methods. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the apparatus 900. Examples of such data include instructions for any applications or methods operated on the apparatus 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the apparatus 900. The power component 906 may include a power supply management system, one or more power sources, and any other components associated with the generation, management, and distribution of power in the apparatus 900.

The multimedia component 908 includes a screen providing an output interface between the apparatus 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The one or more touch sensors may not only sense a boundary of a touch or swipe action, but may also sense a period of time and a pressure associated with the touch or swipe action. In some embodiments, the multimedia component 908 includes a front camera and/or a rear camera. The front camera and/or the rear camera may receive an external multimedia datum while the apparatus 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone (MIC) configured to receive an external audio signal when the apparatus 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 914 includes one or more sensors to provide status assessments of various aspects of the apparatus 900. For instance, the sensor component 914 may detect an open/closed status of the apparatus 900, relative positioning of components, e.g., the display and the keypad, of the apparatus 900, a change in position of the apparatus 900 or a component of the apparatus 900, a presence or absence of user contact with the apparatus 900, an orientation or an acceleration/deceleration of the apparatus 900, and a change in temperature of the apparatus 900. The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor, or a temperature sensor.

The communication component 916 is configured to facilitate communication, wired or wirelessly, between the apparatus 900 and other devices. The apparatus 900 can access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described file transsmission methods.

In exemplary embodiments, there is also provided a non-transitory computer-readable storage medium including instructions, such as included in the memory 904, executable by the processor 918 in the apparatus 900, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A file transmission method, **characterized by** comprising:
scanning at least one terminal that is in a connectable state in a current environment;
establishing a communication connection with a selected terminal;
transmitting a control command to the selected terminal through the communication connection, the control command instructing the selected terminal to perform preset feedback;
receiving a transmission signal for transmitting a file to the selected terminal; and
transmitting the file to the selected terminal.

2. The method according to claim 1, **characterized in that** said transmitting a control command to the selected terminal through the communication connection comprises:
detecting, in the terminal that is in the connectable state, if there is another terminal having the same device name as that of the selected terminal;
transmitting the control command to the selected terminal through the communication connection if there is another terminal having the same device name as that of the selected terminal.

3. The method according to claim 1 or 2, **characterized in that** the control command comprises at least one of: a command to vibrate, a command to ring, a command to twinkle a signal lamp, a command to twinkle a flash lamp and displaying predetermined content.

4. The method according to claim 1 or 2, **characterized in that** said establishing a communication connection with a selected terminal comprises:
displaying a device name of the terminal that is in the connectable state;
receiving a first selecting signal selecting the device name, the first selecting signal being any one of a click signal, a double click signal, a long press signal and a drag signal; and
establishing the communication connection with a terminal corresponding to a selected device name.

5. The method according to claim 3, **characterized in that** said receiving a transmission signal for transmitting a file to the selected terminal comprises: receiving a second selecting signal selecting the device name, the second selecting signal being any one of a click signal, a double click signal, a long press signal and a drag signal.

6. A file transmission apparatus, **characterized by** comprising:
a scanning module configured to scan at least one terminal that is in a connectable state in a current environment;
a connecting module configured to establish a communication connection with a selected terminal;
a first transmitting module configured to transmit a control command to the selected terminal through the communication connection, the control command instructing the selected terminal to perform preset feedback;
a receiving module configured to receive a transmission signal for transmitting a file to the selected terminal; and
a second transmitting module configured to transmit the file to the selected terminal.

7. The apparatus according to claim 6, **characterized in that** the first transmitting module comprises:
a detecting sub-module configured to detect, in the terminal that is in the connectable state, if there is another terminal having the same device name as that of the selected terminal;
a transmitting sub-module configured to transmit the control command to the selected terminal through the communication connection if there is another terminal having the same device name as that of the selected terminal.

8. The apparatus according to claim 6 or 7, **characterized in that** the control command comprises at least one of: a command to vibrate, a command to ring, a command to twinkle a signal lamp, a command to twinkle a flash lamp and displaying predetermined content.

9. The apparatus according to claim 6 or 7, **characterized in that** the connecting module comprises:
a displaying sub-module configured to display a device name of the terminal that is in the connectable state;
a first receiving sub-module configured to receive a first selecting signal selecting the device name, the first selecting signal being any one of a click signal, a double click signal, a long press signal and a drag signal; and
a first connecting sub-module configured to establish the communication connection with a terminal corresponding to a selected device name.

10. The apparatus according to claim 8, **characterized in that** the connecting module is configured to receive a second selecting signal selecting the device name, the second selecting signal being any one of a click signal, a double click signal, a long press signal and a drag signal.

11. A file transmission apparatus, **characterized by** comprising:
a processor; and
a memory configured to store an instruction executable by the processor,
wherein the processor is configured to:
scan at least one terminal that is in a connectable state in a current environment;
establish a communication connection with a selected terminal;
transmit a control command to the selected terminal through the communication connection, the control command instructing the selected terminal to perform preset feedback;
receive a transmission signal for transmitting a file to the selected terminal; and
transmit the file to the selected terminal.

12. The file transmission apparatus of claim 11, wherein the processor is further configured to: detect, in the terminal that is in the connectable state, if there is another terminal having the same device name as that of the selected terminal; and
transmit the control command to the selected terminal through the communication connection if there is another terminal having the same device name as that of the selected terminal.

13. The file transmission apparatus of claim 11 or 12, wherein the processor is further configured to: display a device name of the terminal that is in the connectable state;
receive a first selecting signal selecting the device name, the first selecting signal being any one of a click signal, a double click signal, a long press signal and a drag signal; and
establish the communication connection with a terminal corresponding to a selected device name.

14. A computer program including instructions for executing the steps of a file transmission method according to any one of claims 1 to 5 when said program is executed by a computer.

15. A recording medium readable by a computer and having recorded thereon a computer program including instructions for executing the steps of a file transmission method according to any one of claims 1 to 5.
